(19) Europäisches Patentamt
European Patent Office
Office européen des brevets

(11) **EP 0 689 048 B1**

(12) **FASCICULE DE BREVET EUROPEEN**

(45) Date de publication et mention
de la délivrance du brevet:
**19.09.2001 Bulletin 2001/38**

(51) Int Cl.$^7$: **G01N 23/04**

(21) Numéro de dépôt: **95401433.8**

(22) Date de dépôt: **19.06.1995**

(54) **Procédé d'obtention par radiographie tangentielle d'une image d'un objet en rotation autour d'un axe**

Verfahren zur Erreichung eines Bildes eines um eine Achse rotierenden Gegenstandes, mit Verwendung der Tangentialradiographie

Method for the obtention of the image of an object rotating around an axis by means of tangential radiography

(84) Etats contractants désignés:
**DE GB IT**

(30) Priorité: **21.06.1994 FR 9407570**

(43) Date de publication de la demande:
**27.12.1995 Bulletin 1995/52**

(73) Titulaire: **COMMISSARIAT A L'ENERGIE ATOMIQUE**
**75015 Paris (FR)**

(72) Inventeur: **Rizo, Philippe**
**F-38700 La Tronche (FR)**

(74) Mandataire: **Dubois-Chabert, Guy et al**
**BREVATOME**
**3, rue du Docteur Lanceraux**
**75008 Paris (FR)**

(56) Documents cités:
**US-A- 5 042 055**    **US-A- 5 053 958**
**US-A- 5 313 513**

- **PATENT ABSTRACTS OF JAPAN vol. 17, no. 387 (P-1576) 20 Juillet 1993 & JP-A-05 066 120 (HITACHI MEDICAL) 19 Mars 1993**
- **PATENT ABSTRACTS OF JAPAN vol. 9, no. 281 (P-403) 8 Novembre 1985 & JP-A-60 123 754 (NIPPON KOKAN) 2 Juillet 1985**
- **PATENT ABSTRACTS OF JAPAN vol. 13, no. 580 (P-980) (3928) 21 Décembre 1989 & JP-A-01 245 140 (MITSUBISHI ELECTRIC) 29 Septembre 1989**
- **'1994 IEEE INTERNATIONAL CONFERENCE ON ROBOTICS AND AUTOMATION' 13 Mai 1994 , IEEE COMP.SOC.PRESS , LOS ALAMITOS,CA(USA) , XP000478456 COMMUNICATION DE A.NOBLE ET AL.: X-RAY METROLOGY FOR QUALITY ASSURANCE, PAGES 1113-1119**
- **PATENT ABSTRACTS OF JAPAN vol. 10, no. 358 (P-522) (2415) 2 Décembre 1986 & JP-A-61 155 844 (TOSHIBA CORP.) 15 Juillet 1986**

**Description**

Le domaine technique auquel se rapporte la présente invention est celui de l'obtention d'images d'objets par radiographie X.

Plus précisément, elle trouve une application au contrôle de défauts à la surface d'objets, par radiographie X tangentielle. Ces défauts peuvent être des défauts laminaires à la périphérie d'objets cylindriques en rotation autour d'un axe. C'est le cas notamment sur les propulseurs de fusées, dont les couches externes peuvent présenter des délaminations ou défauts laminaires tangentiels.

Selon l'art antérieur connu du demandeur, deux techniques sont actuellement utilisées pour mettre en évidence de tels défauts : la- radiographie tangentielle et la tomographie.

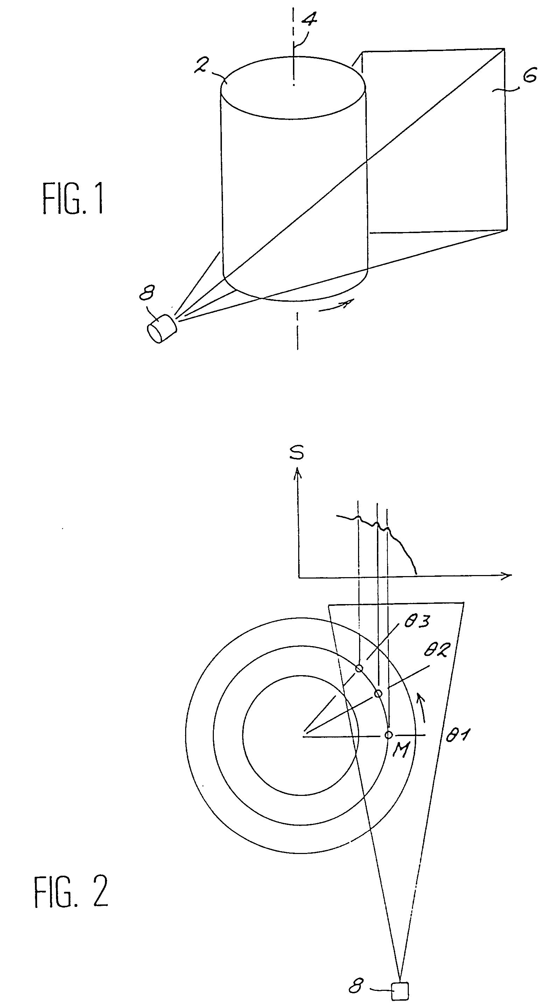

Le procédé de radiographie tangentielle couramment utilisé, illustré schématiquement sur la figure 1, consiste à placer l'objet cylindrique 2 à examiner sur un plateau tournant dont l'axe de rotation est placé au plus près de l'axe de symétrie 4 de l'objet à observer. Pendant la rotation de l'objet, on acquière des radiographies de celui-ci. L'axe focal du système, c'est-à-dire la droite passant par la source 8 de rayons X et perpendiculaire au détecteur 6, passe près de la périphérie de l'objet, dans la zone où on recherche les défauts laminaires.

Ce type de contrôle radiographique n'est en général pas satisfaisant car l'épaisseur de matériaux traversée est en général grande et le défaut à un faible contraste. Afin d'améliorer la détectabilité des défauts laminaires tangentiels, il convient d'utiliser l'information contenue dans l'ensemble des radiographies qui voient le défaut.

Une version améliorée de cette méthode consiste à faire un cumul de radiographies, c'est-à-dire à sommer un certain nombre de radiographie afin de diminuer l'influence du bruit photonique et d'améliorer le rapport signal sur bruit. Pour chaque position angulaire de l'objet, on examinera la somme des radiographies acquises autour de cette position. Cette méthode suppose que les différentes radiographies acquises autour d'une position angulaire donnée sont identiques. De plus, quand on somme des radiographies acquises à des incidences voisine sur l'objet, on suppose implicitement que ces radiographie ne diffèrent que par le bruit de mesure. En fait, cette approximation est d'autant plus fausse que le secteur angulaire sur lequel on acquière les projections est grand.

En effet, supposons que l'on veuille détecter un défaut en périphérie de l'objet, ce défaut va se déplacer sur la radiographie en fonction de la position angulaire de l'objet, comme illustré sur la figure 2. sur cette figure, un défaut situé au point M se déplacera en rotation avec l'objet pour occuper successivement différentes positions repérées par les angles $\Theta_1$, $\Theta_2$, $\Theta_3$. La courbe en haut de la figure 2 représente la somme S des projections à ces différents angles. On voit que sur une ouverture angulaire trop grande, le défaut ne se projette pas au même endroit sur les radiographies. Sur chacune des radiographies de l'objet, le défaut change de place. Sur la somme des radiographies on verra 3 défauts. Si on somme des radiographies correspondant à des positions angulaires très voisines de l'objet, le défaut se déplace très peu sur la radiographie. Par conséquent, la somme des radiographies donne une image avec un rapport signal sur bruit amélioré. Le problème est qu'avec des défauts petits, le secteur angulaire sur lequel cette approximation est valable est très petit, donc le nombre de radiographies que l'on peut sommer est lui-même petit, ce qui limite l'amélioration du rapport signal sur bruit, ou du rapport contraste sur bruit. En outre, d'une façon générale les informations dimensionnelles sont difficiles à obtenir en radiographie tangentielle et, de plus, la localisation des défauts est malaisée.

La tomographie consiste à acquérir une série de projection de tout l'objet suivant toutes les incidences. On utilise ensuite un algorithme de reconstruction pour reconstruire une tranche de l'objet. Cette méthode présente plusieurs inconvénients.

En effet, en tomographie classique, chaque point de l'objet est vu par l'ensemble des projections suivant tout les des directions du plan examiné. A priori, cette méthode présente l'avantage d'assurer la détection des défauts. Il faut toutefois rappeler que les délaminations se trouvent en périphérie des propulseurs et que celles-ci ne sont détectables que dans les directions tangentielles à l'enveloppe du propulseur. Il n'est donc pas intéressant d'acquérir toutes les données pour avoir toute l'information nécessaire sur la délamination. Pour diminuer le temps d'acquisition, on peut limiter l'acquisition aux données situées en bord d'objet (projections creuses). En réalisant une acquisition en projections creuses on ne change rien au temps de reconstruction et au fait que l'image n'est disponible que lorsqu'une rotation complète a été effectuée. Ainsi, le contrôle par tomographie est différé par rapport à l'examen. De plus la tomographie en projections creuses ne peut être appliquée que dans le plan perpendiculaire à l'axe de rotation et contenant l'axe focal : il faut donc déjà positionner le dispositif pour s'assurer qu'un tel plan existe.

En outre, en tomographie 2D, on ne reconstruit qu'une tranche de l'objet. Par conséquent, pour examiner la même zone que des radiographies tangentielles, il faut effectuer un grand nombre de reconstructions plan par plan.

Enfin, la tomographie nécessite d'avoir acquis l'ensemble des projections de l'objet pour permettre la reconstruction d'une image. Par conséquent, avec la tomographie on ne pratique plus un contrôle en ligne, mais un contrôle différé.

La présente invention vise à résoudre ces problèmes et à proposer un procédé d'obtention d'image, sur une surface de détection, d'un objet en rotation autour d'un axe, par radiographie X tangentielle, permettant :

- d'effectuer un contrôle en ligne, et non pas différé, de l'objet examiné,
- d'améliorer le rapport contraste/bruit par rapport aux méthodes de radiographie tangentielle antérieures,
- d'améliorer la localisation des défauts.

De façon plus précise, l'invention a pour objet un procédé d'obtention, par radiographie X tangentielle, de l'image d'une partie d'un objet en rotation autour d'un axe, caractérisé en ce qu'il comporte les étapes suivantes :

(a) détermination de l'intersection d'une première surface (P) avec l'objet,
(b) choix de N (N≥1) points de l'objet, appartenant à la surface déterminée en a),
(c) détermination, n positions différentes de l'objet lors de son mouvement de rotation autour de l'axe, de la position, sur la surface d'un détecteur, des n projections radiographiques de chacun des N points choisis,
(d) acquisition par radiographie X, d'images correspondant chacune à une des n positions de l'objet lors de son mouvement de rotation,
(e) pour chaque image et pour chacun des N points choisis, détermination de l'intensité de la projection X à l'endroit de la projection de ce point sur la surface du détecteur,
(f) pour chacun des N points choisis, sommation des intensités, déterminées à l'étape e), des projections X de ce point.

Avec cette méthode, on tient compte du déplacement de l'objet sur la radiographie en fonction des déplacements angulaires et on ne somme dans l'image finale que les pixels qui correspondent à la projection du même point. De cette façon, on n'est plus limité angulairement.
On obtient ainsi une image nette pour les points à imager et floue pour les points qui se trouvent de part et d'autre de la surface à imager.
L'information sur la dimension de défauts éventuels est améliorée, ainsi que la possibilité de localisation.
En outre, le rapport contraste sur bruit est amélioré dans l'image obtenue.

Brève description des figures

De toute façon, les caractéristiques et avantages de l'invention apparaîtront mieux à la lumière de la description qui va suivre. Cette description porte sur les exemples de réalisation, donnés à titre explicatif et non limitatif, en se référant à des dessins annexés sur lesquels :

- la figure 1, déjà décrite, représente schématiquement un dispositif pour radiographie X tangentielle selon l'art antérieur,
- la figure 2, déjà décrite, représente le procédé de cumul de radiographies selon l'art antérieur,
- la figure 3 représente un dispositif pour la mise en oeuvre du procédé selon l'invention,
- les figures 4a et 4b représentent respectivement le principe du procédé selon l'invention, et le procédé de cumul selon l'art antérieur,
- les figures 5 et 6 représentent, respectivement en perspective et en vue de dessus, un dispositif pour la mise en oeuvre de l'invention,
- la figure 7 représente l'évolution du rapport signal/bruit en fonction de l'angle maximum des projections prises en compte dans la mise en oeuvre d'un procédé selon l'invention,
- les figures 8a et 8b représentent l'évolution des fonds d'image, avec et sans utilisation du procédé selon l'invention,
- les figures 9a à 9c et 10 représentent des fantômes de simulation pour tester le procédé selon l'invention,
- la figure 11 schématise un algorithme de calcul du rapport contraste sur variance du bruit,
- les figures 12a à 12e représentent chacune les 7 sphères du fantôme de la figure 10, vues dans des radiographies successives,
- les figures 13a à 13d représentent les résultats obtenus d'une part dans le cas de la radiographie d'une bille de calibration et, d'autre part, dans le cas de l'image selon le procédé de l'invention,
- les figures 14a à 14c sont des résultats expérimentaux comparatifs portant sur des images de délamination obtenues par radiographie par cumul et par le procédé de l'invention.

Description détaillée de modes de réalisation

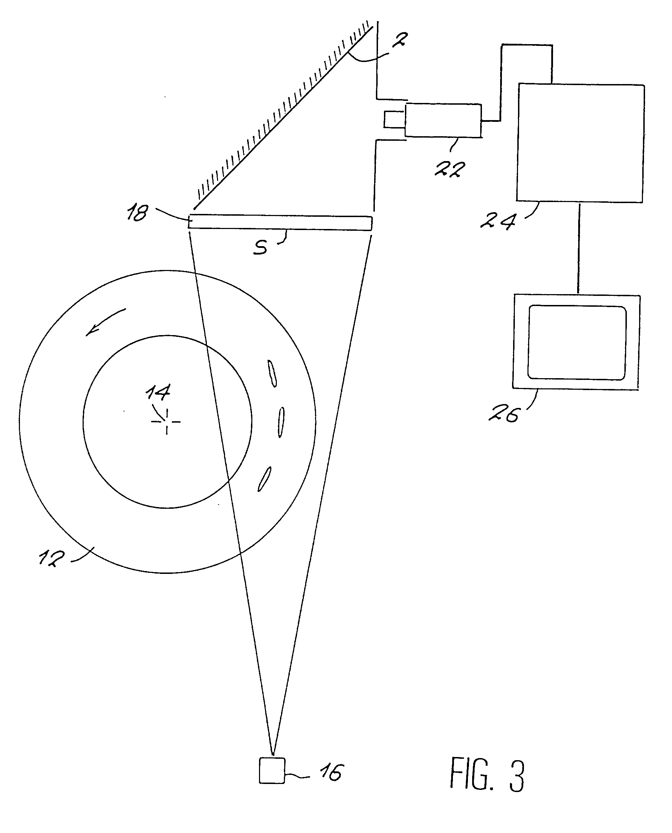

La figure 3 représente un dispositif pour la mise en oeuvre d'un procédé selon l'invention.
Un objet 12 à examiner, par exemple à symétrie cylindrique, est placé en rotation sur un plateau tournant. L'axe de rotation 14 peut être confondu avec l'axe de symétrie cylindrique de l'objet. L'objet est, en outre, placé entre une source 16 de rayons et un écran convertisseur 18, à la surface S duquel on cherche à former une image de la périphérie de l'objet. L'axe focal du système, c'est-à-dire la droite passant par la source de rayons X et perpendiculaire à S, passe près de la périphérie de l'objet, dans la zone où on recherche des défauts laminaires. L'image, après conversion par l'écran 18, est réfléchie par un miroir 20 et visionnée par une caméra 22 connectée à une unité de traitement numérique 24 et à un dispositif de visualisation 26.

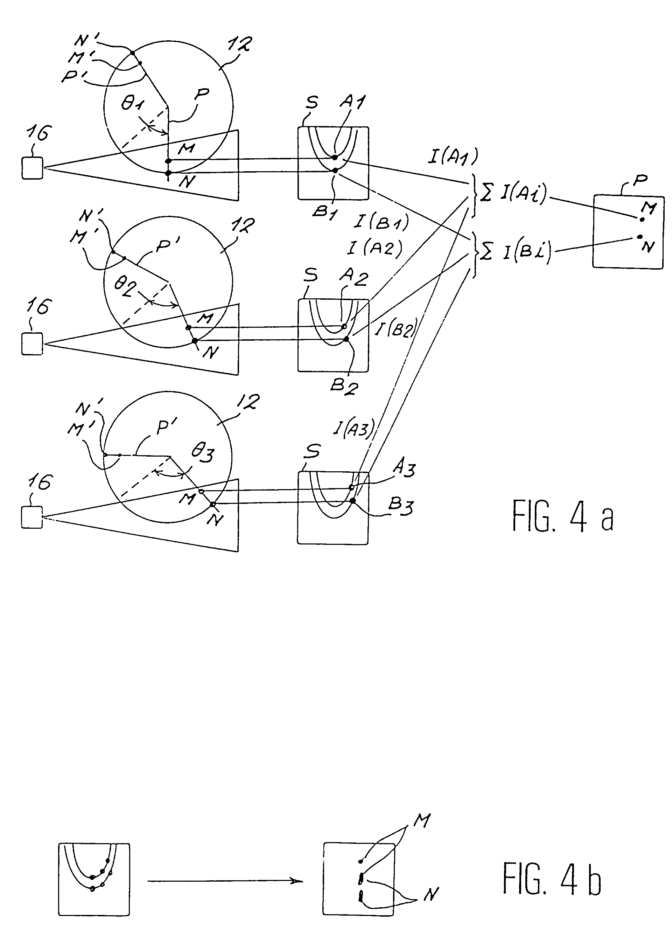

Le principe du procédé selon l'invention peut être expliqué en liaison avec la figure 4a. Sur cette figure, l'objet et le faisceau de rayons X émis par la source 16 sont encore vus de dessus, mais l'image obtenue sur la surface S est représentée de face, et ceci pour 3 positions de l'objet, repérées par trois angles $\theta_1$, $\theta_2$, $\theta_3$ par rapport à une position arbitraire. L'unité de traitement dispose de moyens de mémorisation pour mémoriser chaque pixel de chaque image entre deux positions allant par exemple d'un angle $-\theta$ à $+\theta$.

Soit un plan P vertical, contenant l'axe de rotation de l'objet et dont on veut obtenir une image (sur la figure 4a, on n'a représenté que la trace de ce plan P, intersection de celui-ci avec le plan de la figure). Soient deux points de l'objet, M et N, choisis dans ce plan, ayant des coordonnées $(x_M, y_M, z_M)$ et $(x_N, y_N, z_N)$ dans un repère $(O, x, y, z)$ lié à l'objet, l'axe Oz étant par exemple confondu avec l'axe de rotation de cet objet. On retrouve la projection respectivement de M et N, pour les divers angles $\theta_i$, en $A_i$ et $B_i$ sur la surface S, où ils sont facilement repérables, par exemple par des -coordonnées $(p(A_i), q(A_i))$ et $(p(B_i), q(B_i))$ dans un repère $(u, v, w)$ lié à S.

Pratiquement, à partir de la donnée des points M et N, on peut retrouver les points $A_i$, $B_i$ et leurs coordonnées dans un repère lié à S pour toute projection correspondant à un angle $\theta_i$.

Toutes les coordonnées de ces points peuvent être mémorisées dans une mémoire associée à l'unité de traitement (24) (figure 3).

Pour obtenir l'image du plan P, et en particulier l'image de M et N dans ce plan, on va effectuer d'une part la somme des intensités mesurées en chaque point

$$A_i \left( I_M = \sum_{i=1}^{3} I(A_i) \right)$$

et d'autre part la somme des intensités mesurées en chaque point

$$B_i \left( I_N = \sum_{i=1}^{3} I(B_i) \right).$$

Cette somme peut être réalisée dans l'unité de traitement (24) par des moyens connus par ailleurs de l'homme de l'art.

On obtient ainsi une image nette des points à imager (M et N) et une image floue pour les points qui se trouvent de part et d'autre de la surface à imager. Cette image peut être affichée sur le dispositif de visualisation (26) (figure 1).

La méthode peut ensuite être appliquée à tout autre plan P' contenant également l'axe de rotation, ce plan P' contenant deux points M' et N' sélectionnés et à imager.

Ce procédé tient compte de, ou plutôt évite, toute influence du déplacement de la rotation de l'objet. Au contraire, la méthode par cumul glissant conduit à une superposition de projections décalées les unes par rapport aux autres ; dans le cas des deux points M et N du plan P, la figure 4b illustre le résultat obtenu en cumul glissant : les points M et N sont mal localisés et vont se chevaucher dans l'image finale où il y a donc plus de bruit.

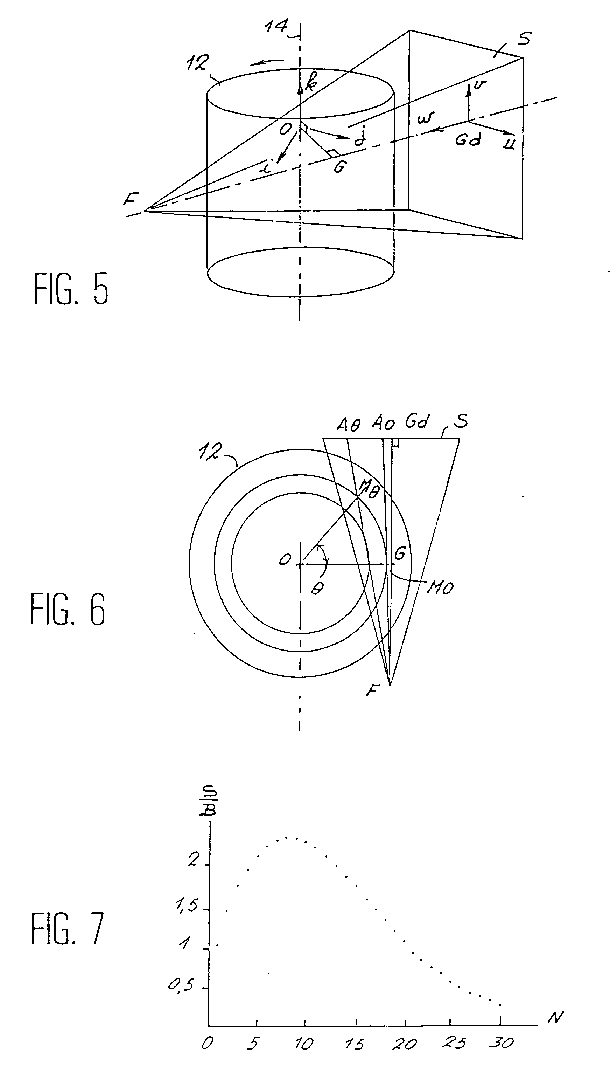

La méthode va maintenant être présentée selon un cadre plus formel. Pour cela, on se référera aux figures 5 et 6 représentant respectivement une vue en perspective et une vue de dessus de l'objet examiné 12, de la source de rayonnement 16 et de la surface de détection S.

On supposera que les rayons sont émis de la source à partir d'un point unique F, encore appelé point focal. $G_d$ est la projection orthogonale de F sur le détecteur et la droite $FG_d$ est appelée axe focal. O est le point de l'axe de rotation 14 de l'objet, le plus proche de l'axe focal et on appelle G le point de l'axe focal le plus près de l'axe de rotation 14. $O_d$ est l'image radiographique de O sur le détecteur. Un repère

$$\left( O, \vec{i}, \vec{j}, \vec{k} \right)$$

est lié à l'objet, l'axe $O\vec{k}$ étant confondu avec l'axe de rotation. Ce repère est en rotation avec l'objet et on peut choisir

l'axe $\mathbf{O}\,\vec{j}$ de telle façon que pour θ=0 (θ tel que défini sur la figure 6), $\mathbf{O}\vec{j}$ soit parallèle au plan S.

Un repère

$$\left( G_d, \vec{u}, \vec{v}, \vec{w} \right)$$

est lié au détecteur, le vecteur $\vec{w}$ étant orienté du détecteur vers le point focal F.

Soit un plan P appelé plan de mesure, contenant l'axe $\mathbf{O}\vec{k}$, lié à l'objet 12 et en rotation avec celui-ci. Si ψ est l'angle de ce plan avec le plan

$$\left( O, \vec{j}, \vec{k} \right),$$

il aura pour équation, dans le repère

$$\left( O, \vec{i}, \vec{j}, \vec{k} \right) :$$

$$(P) : x \cos \psi + y \sin \psi = 0 \qquad (I)$$

Soit R la matrice permettant de passer des coordonnées dans le repère

$$\left( O, \vec{i}, \vec{j}, \vec{k} \right)$$

aux coordonnées dans le repère

$$\left( O, \vec{u}, \vec{v}, \vec{w} \right).$$

On a :

$$R = \begin{bmatrix} \cos\theta\cos\delta - \sin\theta\cos\xi\sin\delta & \cos\theta.\cos\xi\sin\delta + \sin\theta\cos\delta & \sin\delta\sin\xi \\ -\cos\theta.\sin\delta - \sin\theta.\cos\xi.\cos\delta & \cos\theta.\cos\xi.\cos\delta - \sin\theta.\sin\delta & \cos\delta.\sin\xi \\ \sin\theta.\sin\xi & -\cos\theta.\sin\xi & \cos\xi \end{bmatrix}$$

où δ et ξ désignent respectivement l'angle d'Euler correspondant à l'inclinaison des lignes du détecteur et l'angle d'Euler correspondant à l'inclinaison du détecteur, dans le cas où l'axe focal coupe l'axe de rotation.

Soit $M_o$ un point de coordonnées (x, y, z) dans le repère

$$\left( O,\ \vec{i},\ \vec{j},\ \vec{k} \right)$$

et (p, q, l) dans le repère

$$\left( O,\ \vec{u},\ \vec{v},\ \vec{w} \right)\ :$$

$$\begin{pmatrix} p \\ q \\ l \end{pmatrix}_{(u,v,w)} = R \begin{pmatrix} x \\ y \\ z \end{pmatrix}_{(i,j,k)} \qquad \text{(II)}$$

Soit $A_o$ la projection radiographique de ce point $M_o$ sur S, par exemple lorsque le plan P est parallèle à la surface S.

Après rotation d'angle $\theta$ de l'objet, le point $M_o$ est venu en $M_\theta$, dont la projection radiographique sur le plan S est $A_\theta$ .

Dans les repères vectoriels

$$\left( \vec{i},\ \vec{j},\ \vec{k} \right)$$

et

$$\left( \vec{u},\ \vec{v},\ \vec{w} \right),$$

on aura les relations vectorielles suivantes :

$$\overrightarrow{OM_\theta} = x_M\vec{i}+y_M\vec{j}+z_M\vec{k}=p_M\ \vec{u}+q_M\vec{v}+l_M\vec{w}$$

$$\overrightarrow{O_dA_\theta}=p_\theta\vec{u}+q_\theta\vec{v} \qquad \overrightarrow{O_dG_d} = p_{Gd}\ \vec{u}+ q_{Gd}\ \vec{v}$$

$$\overrightarrow{OF} = \overrightarrow{OG} + \overrightarrow{GF} = p_G\ \vec{u}+q_G\vec{v}+FG\vec{w}$$

D'où on déduit :

$$\overrightarrow{FM_\theta} = \overrightarrow{FO}+\overrightarrow{OM_\theta} = \left(p_M-p_G\right)\vec{u}+\left(q_M-q_G\right)\vec{v}+\left(l_M-FG\right)\vec{w}$$

$$\vec{FA}_\theta = \vec{OA}_\theta - \vec{OF} = \left(p_\theta - p_{Gd}\right)\vec{u} + \left(q_\theta - q_{Gd}\right)\vec{v} - \left(FG + GG_d\right)\vec{w}$$

$$\vec{FM}_\theta = \vec{OM}_\theta - \vec{OF} = \left(p_M - p_G\right)\vec{u} + \left(q_M - q_G\right)\vec{v} + \left(l_M - FG\right)\vec{w}$$

$$\vec{OA}_\theta = \left(p_G + p_\theta - p_{Gd}\right)\vec{u} + \left(q_G + q_\theta - q_{Gd}\right)\vec{v} - GG_d\,\vec{w}$$

Les 3 points F, $M_\theta$ et $A_\theta$ sont alignés, puisque $A_\theta$ est la projection radiographique de $M_\theta$. Ceci se traduit par l'équation vectorielle :

$$\vec{FA}_\theta \wedge \vec{FM}_\theta = \vec{0}$$

où "$\wedge$" représente le produit vectoriel.

En développant cette équation dans le repère

$$\left(\vec{u},\,\vec{v},\,\vec{w}\right),$$

on obtient :

$$(III)\ \begin{cases} p_\theta - p_{Gd} = \dfrac{FG_d\left(p_M - p_G\right)}{FG - l_M} \\[4mm] q_\theta - q_{Gd} = \dfrac{FG_d\left(q_M - q_G\right)}{FG - l_M} \end{cases}$$

Ces équations donnent la relation entre la position $M_\theta$ d'un point de l'objet 12 et la position de sa projection radiographique $A_\theta$ sur la surface S.

Comme il existe par ailleurs une relation (II) entre les coordonnées de $\vec{0M}_\theta$ dans les repères

$$\left(\vec{i},\,\vec{j},\,\vec{k}\right)$$

et

$$\left(\vec{u},\,\vec{v},\,\vec{w}\right),$$

on peut en déduire $P_\theta$ et $q_\theta$. On peut, par conséquent, pour chaque position $M_\theta$, lorsque $\theta$ varie, en déduire les positions successives de ses projections radiographiques $A_\theta$ et faire la somme des intensités qui y sont mesurées, comme expliqué ci-dessus en liaison avec la figure 4a. On peut également appliquer le même traitement à plusieurs points du plan P de mesure.

Pour un dispositif "bien constitué" : $\delta = O°$ et $\xi = 90°$ ; on a donc, à titre d'exemple, l'expression simplifiée :

$$\begin{cases} p_\theta - p_{Gd} = \dfrac{FG_d\left(x_M\cos_\theta + y_M\sin_\theta - OG\right)}{FG - x_M\sin_\theta + y_M\sin_\theta} \\[4mm] q_\theta - q_{Gd} = \dfrac{FG_d z_M}{FG - x_M\sin_\theta + y_M\cos\theta} \end{cases}$$

à condition de choisir l'origine $G_d$ de telle façon que $q_G = 0$.

Ces formules II et III peuvent être introduites et programmées par l'opérateur dans l'unité de traitement (24). L'opérateur introduit ensuite les données géométriques relatives aux distances $FG_d$, OG, FG et aux coordonnées $p_{Gd}$ et $q_{Gd}$.

Puis, pour chaque point M de coordonnées $(x_M, y_M, z_M)$, l'unité de traitement peut :

- identifier, pour tout angle $\theta$, le lieu de la projection $A_\theta$ de M, c'est-à-dire en fait calculer $p_\theta$ et $q_\theta$,
- aller chercher, dans l'image mémorisée correspondant à l'angle $\theta$, l'intensité au point repéré par $p\theta$ et $q\theta$,
- effectuer la somme des intensités ainsi mesurées.

La méthode a été décrite dans le cas où les points de mesure appartiennent à une surface de mesure qui est un plan P. On peut l'appliquer à toute autre surface dont l'intersection avec le cylindre est connue, par exemple par son équation cartésienne dans un repère lié à l'objet.

On voit que le procédé de l'invention permet de traiter les images en temps réel parce que, contrairement aux procédés de tomographie, il ne nécessite pas de projections complètes, ni l'acquisition de l'objet sur un tour complet pour obtenir une image, et qu'entre l'acquisition et la visualisation, il y a seulement un déphasage de durée constante.

La puissance du calculateur de l'unité de traitement peut donc être diminuée, mais sa mémoire doit être augmentée.

La méthode permet d'améliorer le rapport signal/bruit. Dans le cas d'une géométrie parallèle (c'est-à-dire si FG est infini, $\delta = 0$ et $\xi = 90°$), considérons un défaut petit, sphérique, d'épaisseur e, situé à une distance Re de l'axe de rotation de l'objet, ce dernier étant à symétrie de révolution autour de cet axe, et de diamètre 2R. L'atténuation mesurée pour l'angle $\theta$ est proportionnelle à :

$$mes(\theta) = e + 2\sqrt{R^2 - Re^2\cos^2\theta}$$

La méthode de sommation décrite ci-dessus consiste à sommer l'ensemble des projections de notre défaut entre deux limites $\theta_d$ et $\theta_f$ (c'est, en gros, un épandage limité à un secteur angulaire) :

$$\sum = \int_{\theta_d}^{\theta_c}\left(e + 2\sqrt{R^2 - Re^2}\cos\theta\right)d\theta$$

A partir des équations précédentes, on peut écrire le contraste radiographique :

$$C_r = \frac{e}{2\sqrt{R^2 - Re^2}},$$

ce contraste est donné pour la radiographie la plus contrastée, à $\theta=0$. Le contraste de la mesure vaut :

$$C_s = \frac{\displaystyle\int_{\theta_d}^{\theta_f} e.d\theta}{\displaystyle\int_{\theta_d}^{\theta_f} 2\sqrt{R^2 - Re^2.\cos^2\theta}\,d\theta}$$

On va regarder comment évolue le rapport de ces contrastes quand on fait varier les limites $\theta_d$ et $\theta_f$. Pour simplifier, on prendra $\theta_d = -\theta_f$. On a alors :

$$\frac{C_s}{C_r} = \frac{\theta_f.\sqrt{R^2 - Re^2}}{\displaystyle\int_0^{\theta_f} \sqrt{R^2 - Re^2.\cos^2\theta}\,d\theta} = \frac{\theta_f}{\displaystyle\int_0^{\theta_f} \sqrt{\frac{R^2 - Re^2.\cos^2\theta}{R^2 - Re^2}}\,d\theta}$$

Dans le cas général, on va sommer des projections sur un secteur angulaire relativement faible, de l'ordre de 10 degrés. On peut donc développer au deuxième ordre le cosinus :

$$\frac{C_s}{C_r} = \frac{\theta_f}{\displaystyle\int_0^{\theta_f} \sqrt{\frac{R^2 - Re^2.\left(1 - \theta^2 + \frac{\theta^4}{4}\right)}{R^2 - Re^2}}\,d\theta}$$

$$\frac{C_s}{C_r} = \frac{\theta_f}{\displaystyle\int_0^{\theta_f} \sqrt{1 + \frac{Re^2}{R^2 - Re^2}\left(\theta^2 - \frac{\theta^4}{4}\right)}\,d\theta}$$

$$\frac{C_s}{C_r} \approx \frac{\theta_f}{\displaystyle\int_0^{\theta_f} \left(1 + \frac{Re^2}{2\left(R^2 - Re^2\right)}\left(\theta^2 - \frac{\theta^4}{4}\right)\right)d\theta} = \frac{\theta_f}{\theta_f + \frac{Re^2}{2\left(R^2 - Re^2\right)}\left(\frac{\theta_f^3}{3} - \frac{\theta_f^5}{20}\right)}$$

Pour $\theta_f$ petit, on voit qu'on perd un peu en contraste, mais cette perte est assez petite. Par contre comme on cumule des radiographies dont le bruit n'est pas corrélé, on diminue le bruit sur les images. Il en résulte une amélioration du rapport contraste sur bruit.

Supposons que les radiographies soient séparées d'un angle $\theta_e$, la variation du rapport contraste sur bruit s'écrira :

$$\frac{C_s.B_r}{C_r.B_s} \approx \frac{\sqrt{\frac{\theta_f}{\theta_e}}.\frac{\theta_f}{\theta_e}.\sqrt{R^2-Re^2}}{\sum_\theta \sqrt{R^2-Re^2.\cos^2\theta}} = \left(\frac{\theta_f}{\theta_e}\right)^{\frac{3}{2}}.\frac{\sqrt{R^2-Re^2}}{\sum_\theta \sqrt{R^2-Re^2.\cos^2\theta}}$$

On a supposé que le bruit avait la même amplitude sur toutes les vues et que ce bruit était d'origine photonique. Par conséquent, si on somme n images acquises dans les mêmes conditions, on divise le bruit par un facteur $n^{0.5}$.

Si on considère que $\theta_f$ est petit, on peut écrire :

$$\frac{C_s.B_r}{C_r.B_s} \approx \sqrt{\frac{\theta_f}{\theta_e}}$$

En conclusion, aux petits angles, notre méthode n'améliore pas le contraste de l'image, mais elle améliore le rapport contraste sur bruit. En fait le bruit n'est pas identique pour toutes les vues car pour les angles forts les rayonnements doivent traverser de grosses épaisseurs de matériaux. Donc dès que l'angle de corrélation devient trop grand (supérieur à quelques degrés) le rapport contraste sur bruit chute très vite. Si on compare le rapport signal sur bruit de la mesure après corrélation (c'est-à-dire après sommation des projections associées à chaque point du plan de l'objet) et le rapport signal sur bruit de la radiographie brute, avec le même défaut et les mêmes conventions que précédemment, on a :

$$S_r = e \qquad \text{(=signal sur la radiographie)}$$

$$S_s = \frac{\theta_f}{\theta_e} e \qquad \text{(=signal sur l'image traitée)}$$

$$B_r = \sqrt{\frac{1+e^{2\mu\sqrt{R^2-Re^2.\cos^2(\theta)}}}{No}} \qquad \text{(=bruit sur la radiographie)}$$

$$B_r = \sqrt{\sum_{\theta=0}^{\theta=\theta_r} \frac{1+e^{2\mu\sqrt{R^2-Re^2.\cos^2(\theta)}}}{No}} \qquad \text{(=bruit sur l'image traitée)}$$

on voit que $\frac{B_r.S_s}{B_s.S_r}$ passe par un maximum pour des angles relativement faibles (No représente le nombre de photons à l'entrée, non atténué).

Pour un angle de 1° entre deux projections, en géométrie parallèle, en considérant un défaut sphérique" dans un cylindre homogène de diamètre 1500 mm et d'atténuation 0,008 mm$^{-1}$, on obtient l'évolution illustrée sur la figure 7 du rapport signal/bruit. Sur cette figure, sont portés en abscisse le nombre de projections prises en compte (en fait il s'agit de l'angle maximum des projections prises en compte, mais on a 1 projection par degré) et en ordonnée l'amélioration du rapport $\frac{S}{B}$ (en unités arbitraires).

Sur cette figure 7, on voit qu'aux angles inférieurs à 8 degrés on améliore le rapport signal sur bruit. Ce rapport signal sur bruit est amélioré par rapport à la radiographie jusqu'à 18°. L'ouverture optimale est de 8° (maximum du rapport signal/bruit), puis, pour les angles supérieurs, on le détériore. Dans les conventions du calcul précédent, on considère qu'on utilise uniquement les projections correspondant aux angles $\theta_f$ positifs. En fait, on peut effectuer exactement le même calcul pour $\theta_f$ négatif, ce qui correspond à une corrélation des radiographies sur 16°. L'angle qui optimise le rapport signal sur bruit est variable suivant la profondeur du défaut dans le cylindre, le coefficient d'atténuation du cylindre et la forme du défaut. Dans le cas des décollements dans les propulseurs, le défaut n'est pas sphérique mais laminaire. Par conséquent, il n'amène de l'information à la projection qu'aux petits angles.

Pour évaluer la stabilité nécessaire des mesures, on va se placer dans le cas d'un dispositif bien constitué. En reprenant les équations données dans le principe de la mesure, on va pouvoir estimer l'influence des erreurs de mesures sur les différents paramètres. On va regarder l'influence des erreurs de mesure sur $FG_d$, OG, FG, $p_{Gd}$ et $q_{Gd}$. On considère implicitement que l'erreur sur $\psi$ est insignifiante. Cette erreur est directement liée à la précision de la platine en rotation. On reprend donc les équations obtenues :

$$\left(p_\theta - p_{Gd}\right) = \frac{FG_d\left(x_M\cos\theta + y_M\sin\theta - OG\right)}{FG - x_M\sin\theta + y_M\sin\theta}$$

$$\left(q_\theta - q_{Gd}\right) = \frac{FG_d z_M}{FG - x_M\sin\theta + y_M\cos\theta}$$

Encore une fois, on se place dans le cas d'un angle d'incidence faible. Si on considère que $\theta$ est petit, $\cos\theta \approx 1$ et $\sin\theta \approx \theta$, il vient :

$$p_\theta \approx \frac{FG_d\left(x_M + y_M\cdot\theta - OG\right)}{FG - x_M\cdot\theta + y_M} + p_{Gd}$$

$$q\theta \approx \frac{FG_d\cdot z_M}{FG - x_M\cdot\theta + y_M} + q_{Gd}$$

L'appréciation de la stabilité se fait à partir de l'évaluation des quantités de la première colonne du Tableau I. La colonne du milieu donne la formule littérale obtenue à partir des équations ci-dessus. La dernière colonne donne les valeurs numériques obtenues avec les paramètres suivants : $x_M$=1500 mm, $y_M$=0, $z_M$=200 mm, $\psi$=0,175 rad, $FG_d$=5000 mm, FG=2500 mm, OG=1500 mm.

## TABLEAU I

| | | |
|---|---|---|
| $\dfrac{\partial p_\theta}{\partial p_{Gd}}$ | 1 | 1 |
| $\dfrac{\partial q_\theta}{\partial q_{Gd}}$ | 0 | 0 |
| $\dfrac{\partial p_\theta}{\partial p_{Gd}}$ | 0 | 0 |
| $\dfrac{\partial q_\theta}{\partial q_{Gd}}$ | 1 | 1 |
| $\dfrac{\partial p_\theta}{\partial FG}$ | $\dfrac{FG_d\left(x_M + y_M\cdot\theta - OG\right)}{\left(FG - x_M\cdot\theta + y_M\right)^2}$ | 0,05 |
| $\dfrac{\partial q_\theta}{\partial FG}$ | $\dfrac{FG_d\cdot z_M}{\left(FG - x_M\cdot\theta + y_M\right)^2}$ | 0,2 |
| $\dfrac{\partial p_\theta}{\partial FG_d}$ | $\dfrac{\left(x_M + y_M\cdot\theta - OG\right)}{\left(FG - x_M\cdot\theta + y_M\right)}$ | 0,02 |
| $\dfrac{\partial q_\theta}{\partial FG_d}$ | $\dfrac{z_M}{\left(FG - x_M\cdot\theta + y_M\right)}$ | 0,09 |
| $\dfrac{\partial p_\theta}{\partial OG}$ | $\dfrac{-FG_d}{\left(FG - x_M\cdot\theta + y_M\right)}$ | 2,23 |
| $\dfrac{\partial q_\theta}{\partial OG}$ | 0 | 0 |

Approximativement, on a donc :

$$\Delta pad = \Delta p_{Gd} + 0{,}05\Delta FG + 0{,}02\Delta FG_d + 2{,}23\Delta OG$$

$$\Delta qad = \Delta q_{Gd} + 0{,}2\Delta FG + 0{,}09\Delta FG_d$$

On peut donc estimer la précision nécessaire sur chacun des paramètres pour obtenir une précision satisfaisante : la mesure de la position de Gd sur le détecteur est très importante ainsi que celle de la distance OG. Ce sont donc les paramètres qu'il faut estimer avec le plus de soin.

Il est possible d'estimer la valeur du fond de l'image derrière le défaut après le traitement proposé selon la présente invention. L'estimation de ce fond permet de savoir si le fond sera très variable où à peu près homogène.

Dans le cas d'une approximation en rayonnement parallèle avec un dispositif bien constitué, la valeur du fond dans le plan contenant la trajectoire du point focal est donnée par :

$$\text{fond} = \int_{\theta_d}^{\theta_f} 2\sqrt{R^2 - Re^2 . \cos^2 \theta} \, d\theta$$

Si on ne somme que sur une ouverture angulaire faible, de l'ordre d'une dizaine de degrés, on obtient, en développant le cosinus :

$$\text{fond} = \int_{\theta_d}^{\theta_f} 2\sqrt{R^2 - Re^2 . \left(1 - \frac{\theta^2}{2}\right)} \, d\theta = \sqrt{2} \, Re \int_{\theta_d}^{\theta_f} \sqrt{2 . \frac{R^2 - Re^2}{Re^2} + \theta^2} \, d\theta$$

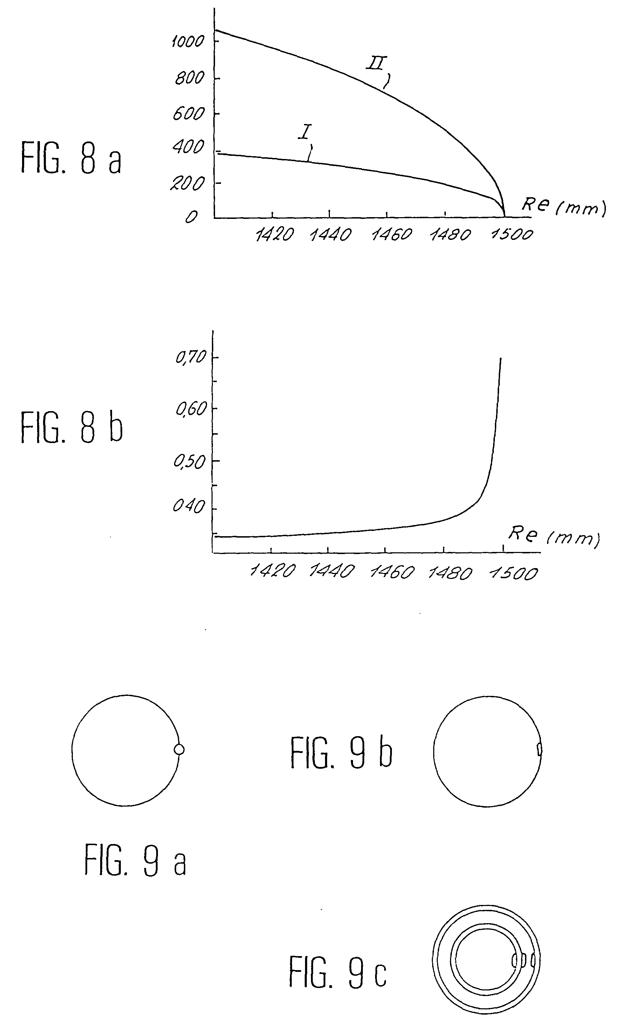

On peut comparer le fond ainsi obtenu avec le fond d'une radiographie, donné par $2\sqrt{R^2 - Re^2}$, qui sont tous deux représentés sur la figure 8a, où sont respectivement portés, en abscisse et en ordonnée, le rayon considéré Re (R est le rayon extérieur de l'objet, R=1500 mm dans les calculs) et le fond d'image après corrélation (c'est-à-dire suivant le procédé selon l'invention, courbe I) et le fond sur radiographie (courbe II). Ces deux valeurs sont calculées à un facteur multiplicatif près qui correspond à l'atténuation pour la radiographie et à l'atténuation que multiplie le pas l'échantillonnage angulaire pour la corrélation.

On voit d'après cette figure, que le fond d'image après corrélation (I) varie beaucoup moins vite que le fond d'image sur la radiographie (II). Par conséquent, à rapport signal sur bruit identique, un défaut sera plus facile à détecter sur l'image obtenue après corrélation que sur la radiographie. Si on trace le rapport entre les deux fonds d'images afin de s'affranchir des facteurs multiplicatifs (figure 8b), on voit que ce phénomène est encore plus prononcé en bord d'objet c'est-à-dire pour des rayons allant de 1460 à 1490 mm. Et c'est justement dans cette zone que sont recherchées les délaminations.

Les résultats et exemples suivants permettent d'illustrer les avantages de l'invention en ce qui concerne le rapport signal son bruit

$$\left(\frac{S}{B}\right),$$

les possibilités d'estimer les dimensions des défauts et l'amélioration de la localisation.

L'amélioration du rapport signal/bruit peut être illustré dans le cadre de 3 configurations ou fantômes théoriques simulés, dénommés F1, F2, F3 :

- F1 : ce fantôme est constitué par une sphère atténuante de petit diamètre (7 mm), dans du vide, sur une sphère de rayon 1500 mm (figure 9a). Pour ce fantôme l'information sur le défaut (la sphère) est la même suivant toutes les directions. Avec ce fantôme, a priori, plus on corrèle de projections, meilleur est le résultat.
- F2 : ce fantôme, constitué d'un ellipsoïde très aplati (0,5 mm x 7 mm x 7 mm) est représenté sur la figure 9b. Cet ellipsoïde représente une délamination sur une sphère de rayon 1500 mm. Pour ce type d'objet on n'a pas d'atténuation due au milieu ambiant. Par contre l'information contenue dans les projections n'est pas uniformément répartie. Seules les projections qui voient le défaut tangentiellement amènent beaucoup d'information. Plus on utilisera de projections, plus le rapport signal sur bruit sera important. Par contre le rapport signal sur bruit croîtra moins vite que pour le fantôme précédent aux grands angles.
- F3 : ce fantôme (figure 9c) est représentatif du propulseur à examiner. Ce qui distingue ce fantôme de F2, c'est le fait que le milieu qui contient le défaut est atténuant. On a utilisé, pour simuler ce fantôme, trois milieux atténuants représentant le" propulseur. On utilise trois sphères concentriques avec les atténuations de l'acier, de la protection thermique, du "liner" et du propergol à 10 MeV. 3 délimitations sont représentées par des ellipsoïdes aplatis (0,5 mm x 20 mm x 20 mm) d'atténuation nulle. On a placé 3 délaminations dans le même plan radial, de part et d'autre du liner et entre la protection thermique et la virole d'acier. Les deux délaminations de part et d'autre du liner sont très proches l'une de l'autre. Par conséquent, on calcule un rapport signal sur bruit global pour ces deux délaminations.

Les atténuations pour les différents matériaux de F3 sont les suivantes :

| acier | 0,008 mm$^{-1}$ |
|---|---|
| protection thermique | 0,0043 mm$^{-1}$ |
| liner | 0,0033 mm$^{-1}$ |
| propergol | 0,0038 mm$^{-1}$ |

Les rayons extérieur ($R_{ext}$) et intérieur ($R_{int}$) des différentes sphères de F3 sont donnés dans le tableau II suivant :

## TABLEAU II

| | $R_{ext}$ | $R_{int}$ |
|---|---|---|
| acier | 1500 mm | 1488 mm |
| protection thermique | 1488 mm | 1468 mm |
| liner | 1468 mm | 1467 mm |
| propergol | 1467 mm | |

Un quatrième fantôme (F4) permet de montrer que les défauts sont bien séparés angulairement par la méthode de corrélation selon l'invention.

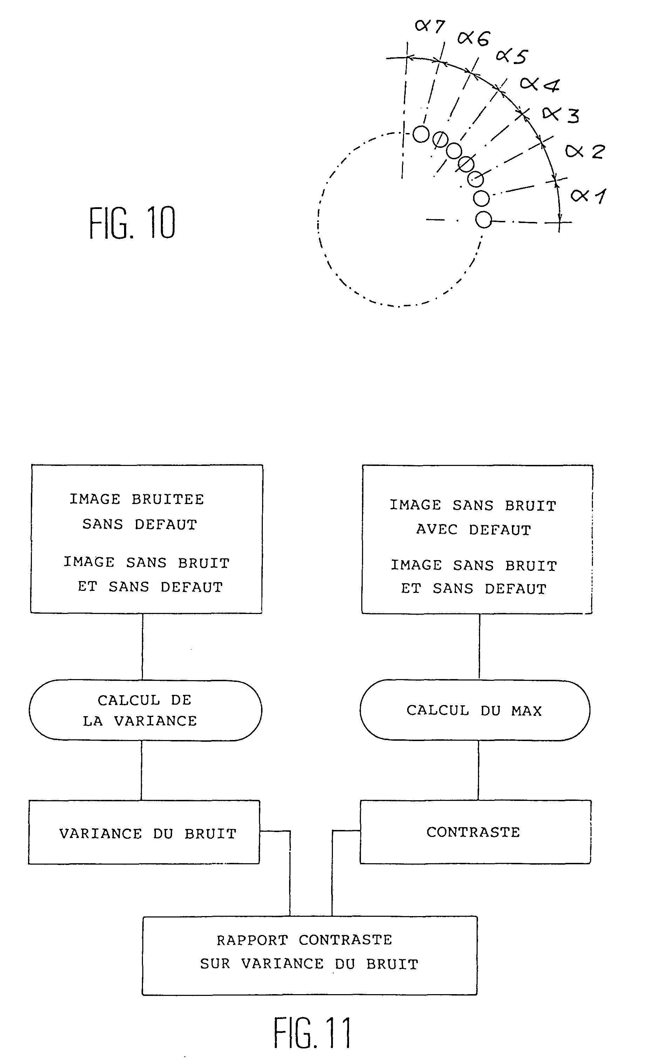

Ce fantôme est constitué de 7 sphères réparties sur un arc de cercle de rayon 1500 mm autour de l'axe de rotation (figure 10). Ces 7 sphères sont réparties de manière non uniforme. L'angle de séparation entre deux sphères voisines va en décroissant : $\alpha_1$=20°, $\alpha_2$=10°, $\alpha_3$=5°, $\alpha_5$=2,5°, $\alpha_6$=1,2°, $\alpha_7$=0,6. On vérifiera sur ce fantôme que lorsque le nombre de radiographies prises en compte augmente, les défauts sont mieux séparés angulairement.

Pour les simulations il a été utilisé une géométrie la plus proche possible de la géométrie dans laquelle travaille le système. Les paramètres correspondant à la géométrie d'acquisition sont les suivants :

| FG=2000 mm | $\xi$=90° | $P_{Gd}$=3000 mm |
|---|---|---|
| FG$_d$=4000 mm | $\delta$=0° | $q_{Gd}$=0 |

Pas d'échantillonnage du détecteur :

- en ligne : pep = 0,78
- en colonne : peq = 0,78

Les images de simulation seront bruitées avec un bruit destiné à simuler le bruit poissonien dû à l'émission photonique. Le principe du calcul de ce bruit est le suivant.

On se place en approximation monoénergétique ; dans un premier temps on calcule les projections non bruitées du fantôme. Dans un deuxième temps, on définit le nombre de photons émis $\phi_0$. Pour chaque pixel image, on calcule la valeur bruitée du pixel de la manière suivante.

- on calcule $\phi_{0bruité}$, qui est le résultat d'un tirage aléatoire d'une variable poissonnienne de variance $\phi_0$
- on calcule $\phi_{bruité}$. Pour cela, on calcule d'abord le flux après atténuation par le matériau, $\phi=\phi_{0bruité}.e^{-\mu x}$ et, ensuite, le flux bruité après atténuation $\phi_{bruité}$ par un tirage aléatoire d'une variable de Poisson de variance $\phi$.
- finalement on calcule "l'atténuation bruitée par

$$att_{bruité} = \log\left(\frac{\phi_{0bruité}}{\phi_{bruité}}\right).$$

Le rapport signal sur bruit est calculé, dans le cas des fantômes définis ci-dessus en utilisant la soustraction de l'image reconstruite sans défaut et sans bruit à l'image reconstruite avec bruit et ceci dans le cas des trois types de données : projections bruitées, image reconstruite après application de la technique de cumul des radiographies (art antérieur décrit en début de ce brevet, et illustré par la figure 4b), image reconstruite par corrélation selon la présente invention. On mesure la variance du bruit au voisinage du défaut et le niveau maximum du signal sur l'image reconstruite sans bruit. Du niveau maximum, on déduit le contraste ; on peut ensuite calculer le rapport contraste sur variance du bruit. Les différentes étapes sont résumées sur la figure 11.

Avec la méthode proposée, les rapports signal sur bruit sont calculés avec des tailles de pixels différents. Pour le cumul, le pixel a la taille d'un pixel du détecteur (0,78 mm x 0,78 mm), et pour la corrélation la taille du pixel est de 0,4 mm x 1 mm. Pour tenir compte de ce facteur d'échelle, il faut normaliser les rapports signal sur bruit par la racine carrée de la surface du pixel, car le nombre de photons comptés par pixel est proportionnel à la surface et l'écart type est proportionnel à la racine carrée du nombre de photons comptés. Le tableau III rassemble les résultats obtenus pour des pixels de taille normalisée. L'angle donné dans la première ligne du tableau est l'angle $\theta$, tel que représenté sur la figure 6.

## TABLEAU III

| fantôme | 5 | | 7 | | 11 | |
|---|---|---|---|---|---|---|
| | correl | cumul | correl | cumul | correl | correl |
| F1 | 25,97 | 20,23 | 23,89 | 23,5 | 29,73 | 34,85 |
| F2 | 27,34 | 16,66 | 31,32 | 13,9 | 33,07 | 34,12 |
| F3 | | | 3,22 | 2,22 | 2,91 | 2,73 |
| | 5,12 | 3,47 | 5,41 | 3,3 | 5,24 | 4,54 |

| fantôme | 15° | | 21° | |
|---|---|---|---|---|
| | correl | cumul | correl | cumul |
| F1 | 34,85 | 28,39 | 39,4 | 24,22 |
| F2 | 34,12 | 9,56 | 33,3 | 8,12 |
| F3 | 2,73 | 1,55 | 2,12 | 1,37 |
| | 4,54 | 2,19 | 3,34 | 1,85 |

Sur le tableau III ci-dessus, on voit qu'aux faibles angles les comportements du cumul de radiographie et de la corrélation sont à peu près identiques. Par contre dès que l'angle augmente, dans le cas du cumul, le défaut ne se projette plus dans la même position (c'est le comportement illustré sur la figure 4b), le signal n'augmente plus et le bruit augmente. Le rapport signal sur bruit chute donc très vite. Dans le cas de défauts étroits ce phénomène est encore amplifié, comme on peut le voir avec F2. Par conséquent, dans le cas des délaminations, le cumul ne pourra être utilisé que pour des angles inférieurs à 5 degrés (on sommera sur des radiographies situées entre -2,5° et 2,5°). On pourra par contre utiliser la technique de corrélation selon l'invention, même dans les "grands" angles.

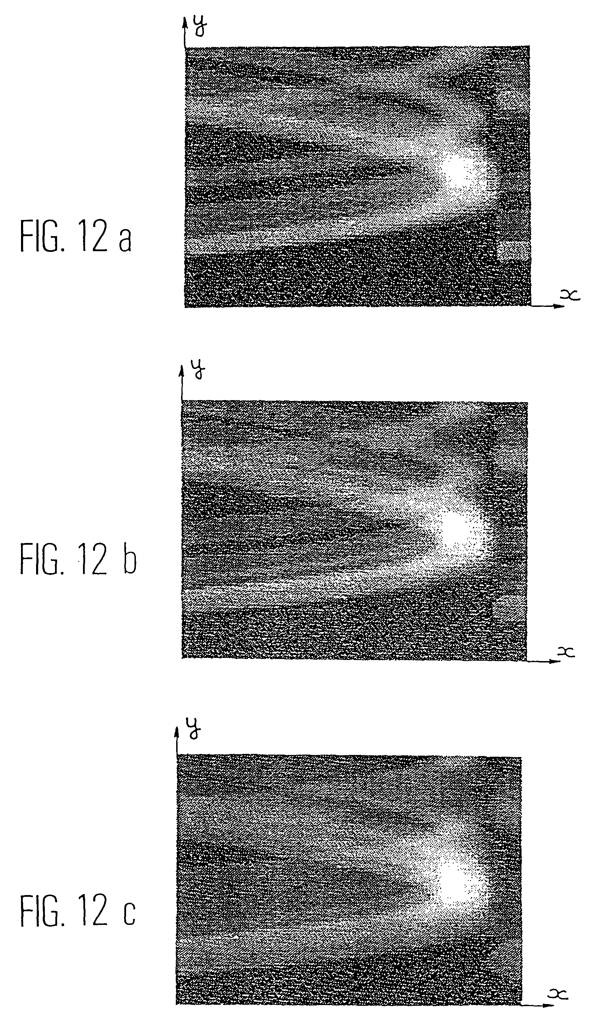

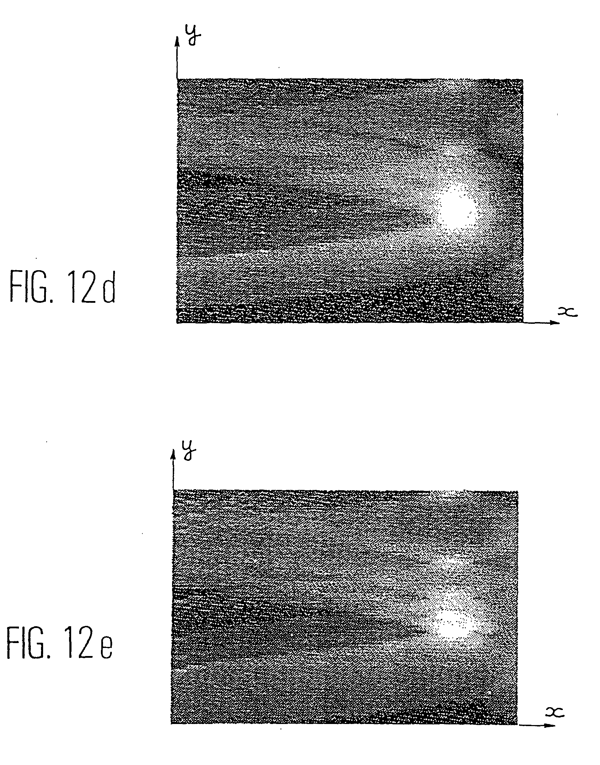

Les différents traitements du fantôme F3 (7 sphères) permettent de vérifier que le traitement proposé améliore la localisation des défauts. Sur ce fantôme les sphères sont disposées de plus en plus proches les unes des autres. Avec une radiographie standard, on est incapable de les compter, avec un cumul glissant on est capable de séparer la première sphère du lot, et avec un traitement par la technique selon l'invention, on est capable d'en dénombrer 5 sur les 7, comme illustré sur les figures 12a à 12e. La figure 12a est obtenue pour 5 projections, la figure 12b pour 7 projections, la figure 12c pour 11 projections, la figure 12d pour 15 projections, la figure 12e pour 21 projections. Chacune des images représente les 7 sphères vues dans les radiographies successives, l'axe des X est une ligne de l'image traitée, l'axe des Y est le temps.

La validation expérimentale de la méthode de radiographie tangentielle selon l'invention a été menée sur une maquette expérimentale à l'échelle 1/10ème.

Le but de cet expérimentation est de se placer dans des conditions de géométrie, de flux et de rapport signal sur bruit comparables aux conditions expérimentales de radiographie tangentielle sur les propulseurs.

Géométrie du système

La géométrie a été choisie de telle façon qu'elle soit à l'échelle 1/10ème de la géométrie de contrôle des propulseurs. Une fois la géométrie d'acquisition choisie, ont été mesurés les paramètres géométriques qui pouvaient l'être et les autres ont été estimés.

a) - Paramètres intrinsèques :

Dans un premier temps, les paramètres intrinsèques du système, c'est-à-dire ceux qui définissent le système source-détecteur ont été définis. Ces paramètres sont les suivants (rapport de spécification méthodes) :

- $p_{Gd}$ abscisse sur le détecteur de la projection orthogonale du foyer (en nombre de pixels),
- qGd ordonnée sur le détecteur de la projection orthogonale du foyer (en nombre de pixels),
- pep pas d'échantillonnage des lignes du détecteur (en mm),
- peq pas d'échantillonnage des colonnes du détecteur (en mm),
- $FG_d$ distance entre le foyer et le détecteur (en mm).

FGd est mesuré directement sur le système; Dans le cadre de la radiographie tangentielle des propulseurs la géométrie du rayonnement est à peu près parallèle, et la précision requise sur la mesure de FGd est assez faible. D'autre part, les estimations de cette distance par des méthodes de triangulation sont très imprécises du fait de la faible conicité de la géométrie.

Pour mesurer pep et peq, on place une plaque de cuivre percée de trous avec un pas régulier en contact avec la fenêtre d'entrée du détecteur. L'espacement s entre les trous de la plaque est de 10 mm. Si p1 et p2 sont les abscisses de deux trous successifs et q1 et q2 leurs ordonnées, on a :

$$pep = \frac{S}{p2-p1} \text{ et } peq = \frac{S}{q2-q1}$$

La principale difficulté est en fait l'estimation de la position de la projection Gd du point focal F sur le détecteur. Pour estimer cette position nous avons repris la méthode présentée par Rizo et al. dans "Geometric Calibration Method for Multiple Heads Cone-Beam SPECT Systems" (IEEE Medical Imaging Conference, San Francisco 1993). Le principe est de déplacer, perpendiculairement au détecteur et d'une distance connue, une grille. Les mesure du déplacement des points de la grille permet de remonter à la position de la projection du point focal sur le détecteur.

On déplace une grille d'une distance connue e perpendiculairement au détecteur. Le déplacement dg de la projection de chaque point de la grille permet de calculer la distance δg de la projection du point pour la grille près du détecteur à Gd. On a :

$$dg = \frac{FG-e}{e}\,\delta g.$$

Sur l'image de la grille, après calcul des déplacements pour l'ensemble des points de la grille, on trouve (en pixels) : pgd=155 et qgd=160. Ce qui donne, en pixels, sur l'image de travail et en tenant compte de la position relative de ces deux images : pgd=p1dg+155-p1dm=17 et qgd=q1dg+160-q1dm=160 où (p1dg, q1dg) repère la position, en nombre de pixels, du 1er pixel de l'image de grille dans la trame de la caméra et où (p1dm, q1dm) repère la position du premier pixel de l'image de mesure dans la trame de la caméra.

Les paramètres estimés sont donc les suivants :

| pgd=17 pixels, | pep=0,20 mm, | FGd=476 mm |
|---|---|---|
| qgd=160 pixels, | peq=0,15 mm, | |

b) - <u>Paramètres extrinsèques</u> :

Les paramètres extrinsèques sont les paramètres qui décrivent la position relative de l'objet et du système de radiographie (ensemble source détecteur). Les paramètres extrinsèques sont tous estimés simultanément par la méthode qui correspond à l'algorithme présenté dans "Geometric Calibration Method for Multiple Heads Cone-Beam SPECT System" déjà cité ci-dessus. La principale différence vient du fait que l'estimation est faite sur une portion de la trajectoire de la source et pas sur la trajectoire complète. Les paramètres extrinsèques sont les suivants, leur estimation étant donnée entre parenthèse :

- FG distance foyer axe de rotation (243,88 mm),
- $\xi$ angle d'Euler correspondant à l'inclinaison du détecteur (89,909°),
- $\delta$ angle d'Euler correspondant à l'inclinaison des lignes du détecteur (-0,795°),
- $\theta_0$ position angulaire de la pige de calibration dans la première image (-17,80°),
- z position axiale de la pige de calibration (-9,033 mm),
- $\rho$ position radiale de la pige de calibration (144,6 mm),
- $O_d G_d$ distance entre la projection conique de l'origine du repère objet et Gd (288,81 mm).

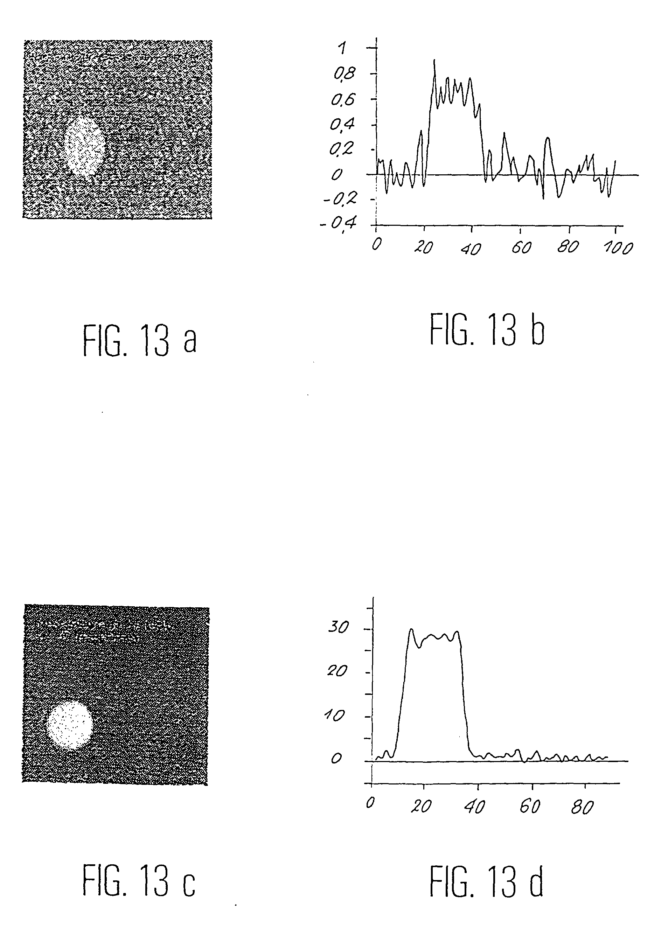

Parmi ces paramètres, $\rho$ n'est pas estimé. En effet, tous ces paramètres sont définis à un facteur d'échelle près. Ce facteur d'échelle est donné par $\rho$. Par conséquent, on place la pige à un rayon le plus précis possible et on fixe ce rayon dans l'estimation des paramètres. Dans les expérimentations, les données à traiter et le fichier de calibration ont été acquis simultanément. En effet, sur le fantôme, on trouve des billes de plomb isolées. En prenant le logarithme du rapport entre une zone sans défaut et une zone où on trouve une bille de plomb isolée, on fabrique le fichier sur lequel seule la bille de plomb est visible. C'est sur ce fichier de calibration que sont estimés les paramètres extrinsèques. Les résultats sont illustrés sur les figures 13a à 13d ; les figures 13a et 13c représentent respectivement la radiographie brute de la bille et l'image de cette bille par un procédé selon l'invention. Les figures 13b et 13d représentent l'intensité du signal le long d'une coupe passant par la bille, dans chacune des deux images des figures 13a et 13c. On voit déjà, sur ces résultats, l'amélioration du rapport signal sur bruit obtenue grâce à l'invention.

La somme des distances entre les positions estimées de la pige et les positions mesurées (erreur d'estimation) vaut 44,35 pixels. Comme on minimise sur 43 projections, ceci correspond à une erreur moyenne de l'ordre du pixel pour chaque position de source. Après traitement, un défaut de n pixels s'étalera donc sur n+1 pixels (on génère un flou de l'ordre de 0,1 mm).

Paramètres de l'expérimentation

Ces paramètres décrivent les conditions expérimentales qui ne dépendent pas de la géométrie du système.
Amplificateur de brillance :

- position petit champ (grossissement max.),
- iris à mi-ouverture,
- protection de l'écran par 6mm de plomb en dehors de la zone d'intérêt.

Frame Grabber (Système de numérisation) : gain 255, offset 0,17.
Source X : tension 120kV, courant 10mA,
**[0100]** Conformateur : utilisation d'un tube d'aluminium de 15cm de diamètre placé à peu près tangent à la paroi du fantôme.

Résultats

Les images expérimentales (figures 13a à 13d) obtenues pour une bille ont déjà été présentées et mettent en évidence l'amélioration du rapport signal sur bruit, ainsi que la possibilité de dimensionner le défaut.
Pour les délaminations, ont été comparées :

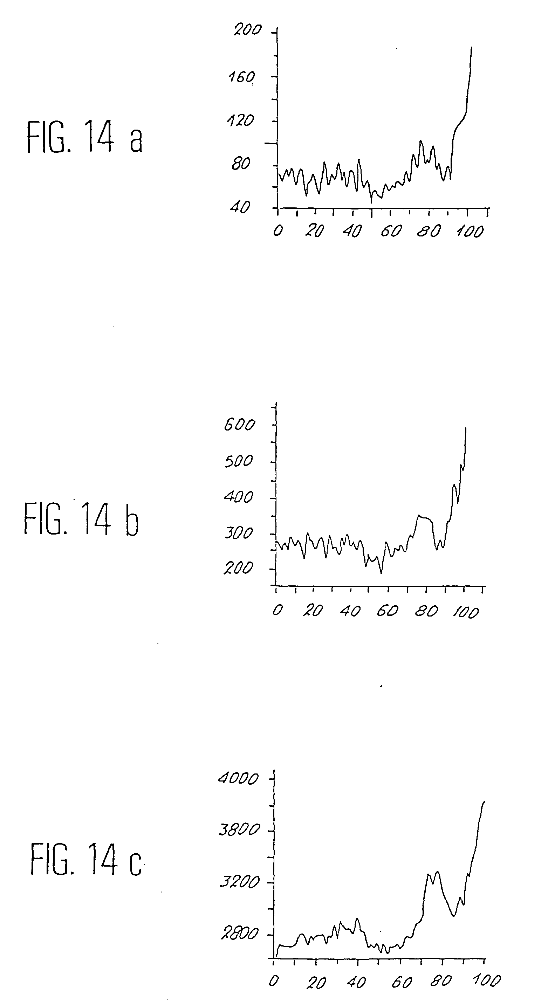

- la radiographie brute (la figure 14a représente une coupe suivant le défaut de l'image obtenue par radiographie),

- l'image fournie par le cumul glissant sur 4 radiographies (tel que classiquement pratiqué en contrôle de propulseurs) (coupe suivant le défaut en figure 14b),
- le traitement par le procédé selon l'invention (coupe suivant le défaut en figure 14c).

On observe, d'après ces figures, une amélioration du rapport signal sur bruit de l'ordre de 2 du cumul glissant par rapport à la radiographie et de l'ordre de 6 du procédé selon l'invention par rapport au cumul glissant.

A partir des images traitées, on peut estimer la dimension des défauts. Pour les billes, on mesure directement, dans le plan où la bille est la mieux vue, la largeur à mi-hauteur du signal correspondant. On trouve pour la bille une largeur de 2,3 mm. Pour les délaminations, dans l'image de meilleur contraste, on soustrait à la zone avec délamination une zone sans délamination et on mesure ensuite la largeur à mi-hauteur. Seule la largeur à mi-hauteur sur les délaminations de type z sur l'aluminium peut être mesurée. On trouve une largeur de 1mm. Pour les autres délaminations, le rapport signal sur bruit était trop faible pour permettre une mesure dimensionnelle.

Ces mesures de largeurs sont très proches des véritables dimensions de la bille et des délaminations. L'erreur de dimensionnement est de l'ordre de la dimension du flux de 0,1 mm généré par la méthode de tomosynthèse.

On remarquera que dans le cas d'une radiographie standard on ne peut fournir d'estimation précise de la dimension du défaut car on ne connaît ni" la position angulaire de la radiographie examinée, ni la position du défaut au moment de la radiographie.

Sur les images traitées avec un pas angulaire de 1°, que ce soit pour les billes ou pour les délaminations, à chaque fois une seule image donnait le défaut de manière nette. Ceci signifie que la localisation du défaut est meilleure que 1°. Dans le cas des propulseurs de 3m de diamètre, on peut donc localiser le défaut à mieux que 26mm près.

## Revendications

1. Procédé d'obtention, par radiographie X tangentielle, de l'image d'une partie d'un objet (12) en rotation autour d'un axe (14), **caractérisé en ce qu'**il comporte les étapes suivantes :

   (a) détermination de l'intersection d'une première surface (P) avec l'objet,
   (b) choix de N (N≥1) points de l'objet, appartenant à la surface déterminée en a),
   (c) détermination, pour n positions différentes de l'objet lors de son mouvement de rotation autour de l'axe, de la position, sur la surface d'un détecteur, des n projections radiographiques de chacun des N points choisis,
   (d) acquisition par radiographie X, d'images correspondant chacune à une des n positions de l'objet lors de son mouvement de rotation,
   (e) pour chaque image et pour chacun des N points choisis, détermination de l'intensité de la projection X à l'endroit de la projection de ce point sur la surface du détecteur,
   (f) pour chacun des N points choisis, sommation des intensités, déterminées à l'étape e), des projections X de ce point.

2. Procédé selon la revendication 1, **caractérisé en ce qu'**on applique ensuite les mêmes étapes b) à f) pour k(k≥1) autres surfaces dont on détermine, pour chacune, l'intersection avec l'objet.

3. Procédé selon l'une des revendications précédentes, **caractérisé en ce que** l'une ou plusieurs des surfaces contiennent l'axe de rotation (14) de l'objet (12).

4. Procédé selon la revendication 3, **caractérisé en ce que** l'une ou plusieurs des surfaces sont chacune un demi-plan passant par l'axe de rotation de l'objet.

5. Procédé selon la revendication 1, **caractérisé en ce que** l'objet est à symétrie cylindrique autour de son axe de révolution.

6. Procédé selon l'une des revendications 1 ou 2, **caractérisé en ce que** les N points choisis au cours d'une ou de plusieurs étapes b) sont choisis au voisinage de la périphérie de l'objet.

7. Procédé selon la revendication 1, **caractérisé en ce que** la sommation de l'étape e) est réalisée pour n positions de l'objet entre deux positions angulaires extrêmes définissant un angle inférieur ou égal à 25°.

**EP 0 689 048 B1**

**Claims**

1. Method for obtaining, by tangential x-radiography, the image of a part of an object (12) in rotation about an axis (14), **characterized in that** it comprises the following steps:

   (a) determination of the intersection of a first surface (P) with the object,
   (b) selection of N (N≥1) points of the object, belonging to the surface determined in a),
   (c) determination, for n different positions of the object during its rotational movement about the axis, of the position, on the surface of a detector, of the n radiographic projections of each of the N selected points,
   (d) acquisition, by x-radiography, of images which each correspond to one of the n different positions of the object during its rotational movement,
   (e) for each image and for each of the N selected points, determination of the intensity of the x-ray projection at the location of the projection of this point onto the surface of the detector,
   (f) for each of the N selected points, summation of the intensities, determined in step e), of the x-ray projections of this point.

2. Method according to Claim 1, **characterized in that** the same steps b) to f) are then applied for k (k≥1) other surfaces, for each of which the intersection with the object is determined.

3. Method according to one of the preceding claims, **characterized in that** one or more of the surfaces contain the axis of rotation (14) of the object (12).

4. Method according to Claim 3, **characterized in that** one or more of the surfaces are each a half-plane passing through the axis of rotation of the object.

5. Method according to Claim 1, **characterized in that** the object has cylindrical symmetry about its axis of revolution.

6. Method according to one of Claims 1 and 2, **characterized in that** the N points selected during one or more steps b) are selected in the vicinity of the periphery of the object.

7. Method according to Claim 1, **characterized in that** the summation in step e) is carried out for n positions of the object between two extreme angular positions defining an angle less than or equal to 25°.

**Patentansprüche**

1. Verfahren zur Herstellung des Bildes eines Teils eines um eine Achse (14) rotierenden Gegenstands (12) durch Tangentialradiographie bzw. -röntgenographie,
   **dadurch gekennzeichnet, dass** es die folgenden Schritte umfasst:

   (a) Bestimmen bzw. Festlegen der Durchschneidung des Gegenstands mit einer ersten Fläche (P),
   (b) Wählen von N (N≥1) zu der in a) festgelegten Fläche gehörenden Punkten des Gegenstands,
   (c) Bestimmen der Position der n radiographischen Projektionen jedes der N gewählten Punkte auf der Oberfläche eines Detektors für die n verschiedene Stellungen des Gegenstands bei seiner Rotation um die Achse,
   (d) Erfassen von Bildern durch Röntgenographie, von denen jedes einer der n Stellungen des Gegenstands bei seiner Rotationsbewegung entspricht,
   (e) Bestimmen bzw. Ermitteln der Intensität der Röntgenprojektion für jedes Bild und für jeden der gewählten Punkte an der Stelle der Projektion dieses Punkts auf der Oberfläche des Detektors,
   (f) Summieren der in Schritt e) ermittelten Intensitäten der Röntgenprojektionen dieses Punkts für jeden der N gewählten Punkte.

2. Verfahren nach Anspruch 1, **dadurch gekennzeichnet, dass** man anschließend dieselben Schritte b) bis f) für k (k≥1) andere Flächen anwendet, wobei man für jede die Durchschneidung des Gegenstands bestimmt bzw. festlegt.

3. Verfahren nach einem der vorangehenden Ansprüche, **dadurch gekennzeichnet, dass** eine oder mehrere der Flächen die Rotationsachse (14) des Gegenstands (12) enthalten.

4. Verfahren nach Anspruch 3, **dadurch gekennzeichnet, dass** eine oder mehrere der Flächen Halbebenen sind, die durch die Rotationsachse des Gegenstands verlaufen.

5. Verfahren nach Anspruch 1, **dadurch gekennzeichnet, dass** der Gegenstand eine zylindrische Symmetrie um seine Rotationsachse herum aufweist.

6. Verfahren nach Anspruch 1 oder 2, **dadurch gekennzeichnet, dass** die im Laufe eines oder mehrerer Schritte b) gewählten N Punkte in der Nähe des Rands des Gegenstands gewählt werden.

7. Verfahren nach Anspruch 1, **dadurch gekennzeichnet, dass** das Summieren des Schritts e) für n Stellungen des Gegenstands zwischen zwei extremen Winkelstellungen erfolgt, die einen Winkel kleiner als oder gleich 25° definieren.

FIG. 1

FIG. 2

FIG. 3

FIG. 4 a

FIG. 4 b

FIG. 5

FIG. 6

FIG. 7

24

FIG. 8 a

FIG. 8 b

FIG. 9 a

FIG. 9 b

FIG. 9 c

FIG. 10

IMAGE BRUITEE
SANS DEFAUT

IMAGE SANS BRUIT
ET SANS DEFAUT

IMAGE SANS BRUIT
AVEC DEFAUT

IMAGE SANS BRUIT
ET SANS DEFAUT

CALCUL DE
LA VARIANCE

CALCUL DU MAX

VARIANCE DU BRUIT

CONTRASTE

RAPPORT CONTRASTE
SUR VARIANCE DU BRUIT

FIG. 11

26

FIG. 12 a

FIG. 12 b

FIG. 12 c

FIG. 12 d

FIG. 12 e

FIG. 13 a

FIG. 13 b

FIG. 13 c

FIG. 13 d

FIG. 14 a

FIG. 14 b

FIG. 14 c